(19) Europäisches Patentamt

European Patent Office

Office européen des brevets

(11) Veröffentlichungsnummer: **0 184 253 B1**

# (12) EUROPÄISCHE PATENTSCHRIFT

(45) Veröffentlichungstag der Patentschrift: **13.05.92**

(51) Int. Cl.⁵: **H04N 9/64**

(21) Anmeldenummer: **85201899.3**

(22) Anmeldetag: **19.11.85**

Die Akte enthält technische Angaben, die nach
dem Eingang der Anmeldung eingereicht wurden
und die nicht in dieser Patentschrift enthalten sind.

(54) **Schaltungsanordnung zum Ableiten eines Stellsignals.**

(30) Priorität: **01.12.84 DE 3443924**

(43) Veröffentlichungstag der Anmeldung:
**11.06.86 Patentblatt 86/24**

(45) Bekanntmachung des Hinweises auf die
Patenterteilung:
**13.05.92 Patentblatt 92/20**

(84) Benannte Vertragsstaaten:
**AT DE FR GB**

(56) Entgegenhaltungen:
**GB-A- 2 091 971**
**US-A- 4 337 477**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB AT**

(72) Erfinder: **Matthies, Karl-Heinz
Tarfenbööm 14g
W-2000 Hamburg 62(DE)**

(74) Vertreter: **Hartmann, Heinrich, Dipl.-Ing. et al
Philips Patentverwaltung GmbH Wendenstrasse 35 Postfach 10 51 49
W-2000 Hamburg 1(DE)**

EP 0 184 253 B1

## Beschreibung

Die Erfindung bezieht sich auf eine Schaltungsanordnung zum Ableiten eines Stellsignals aus einem Synchronisiersignal mit in vorgegebener Folge wechselnder Phase, wobei das Stellsignal von den vorgegebenen Wechseln der Phase unabhängig ist, mit einem Bezugsoszillator zum Liefern einer Bezugsschwingung bestimmter Frequenz und Phase, einer Phasenvergleichseinrichtung zum Bilden eines der Phasendifferenz zwischen dem Synchronisiersignal und der Bezugsschwingung entsprechenden Phasensignals, einer Korrekturschaltung zum Erzeugen eines Korrektursignals, das eine Amplitude vorgegebener Höhe sowie eine wechselnde Polarität aufweist, sowie einer Verknüpfungseinrichtung zum Überlagern des Phasensignals und des Korrektursignals zu dem Stellsignal derart, daß darin von den Phasenwechseln des Synchronisiersignals herrührende Änderungen ausgelöscht sind.

Aus der DE-PS 32 02 210 ist eine Vorrichtung zur Verarbeitung eines PAL-Farbvideosignals bekannt, bei der ein von einem Bezugsoszillator abgegebenes Bezugsausgangssignal einem Phasenvergleicher zugeführt wird, an dem weiterhin auch ein trägerfrequentes Farbartsignal anliegt. Der Phasenvergleicher vergleicht die Phase des trägerfrequenten Farbartsignals mit derjenigen des Bezugsausgangssignals, das die Frequenz des Farbhilfsträgers aufweist. Der Phasenvergleich zwischen dem trägerfrequenten Farbartsignal und dem Bezugsausgangssignal wird im Phasenvergleicher während der Farbsynchronsignalperiode ausgeführt. Von dem Phasenvergleicher wird ein Ausgangssignal über einen Addierer und ein Tiefpaßfilter als Stellsignal an einen durchstimmbaren Oszillator angelegt, um dessen Schwingungsfrequenz zu steuern.

Bei der Verarbeitung eines PAL-Farbvideosignals ist die Phase des an den Phasenvergleicher angelegten Farbsynchronsignals in der einen horizontalen Abtastperiode gegenüber derjenigen in der nächsten horizontalen Abtastperiode um ungefähr 90° verändert, und die Schaltungsanordnung arbeitet derart, daß die mittlere Phase des Farbsynchronsignals mit der Phase des Bezugsausgangssignals synchronisiert ist. Daher erscheinen am Ausgang des Phasenvergleichers Phasenfehler, die einem Phasenunterschied von ungefähr 45° entsprechen und in abwechselnden horizontalen Abtastperioden unterschiedliche Polaritäten aufweisen. Wird das Signal vom Ausgang des Phasenvergleichers unmittelbar durch das Tiefpaßfilter an den durchstimmbaren Oszillator angelegt, ändert sich dessen Schwingfrequenz in der Zeile, wodurch eine Phasenänderung des trägerfrequenten Farbartsignals in der Zeile hervorgerufen wird.

Die bekannte Schaltungsanordnung ist daher mit einer Korrekturschaltung versehen, die eine derartige unerwünschte Farbartänderung in der Zeile verhindern soll. Diese Korrekturschaltung besteht aus einer Schaltungsanordnung zum Trennen, Aufbereiten und Teilen des im Farbvideosignal enthaltenen Horizontalsynchronsignals, durch die ein die halbe Horizontalfrequenz aufweisendes, kontinuierliches Impulssignal erzeugt wird. Dieses wird über eine Phasenumkehrstufe einer Stromquelle zum Steuern der Polarität eines von ihr abgegebenen Gleichstromes konstanter Amplitude zugeführt. Dieser Gleichstrom wird in dem Addierer dem Ausgangssignal des Phasenvergleichers überlagert.

Um sicherzustellen, daß dem Ausgangssignal vom Phasenvergleicher ein Strom in der richtigen Polarität überlagert wird, d.h. derart, daß die darin enthaltenen halbzeilenfrequenten Komponenten ausgelöscht werden, wird das Stellsignal vom Ausgang des Tiefpaßfilters weiterhin über ein Hochpaßfilter, einen Halbwellengleichrichter und einen Impulsformer einem Impulszähler zugeführt, der vom Ausgang des Tiefpaßfilters abgegebene Impulse zählt. Das Ausgangssignal des Impulszählers geht von seinem "0"-Pegel auf seinen "1"-Pegel über, wenn der Zähler vier Impulse gezählt hat. Mit diesem Übergang wird ein Flipflop angesteuert, das eine Phasenumkehrstufe umschaltet, mit der die Polarität des Signals mit der halben Horizontalfrequenz und damit die Polarität des von der Stromquelle dem Addierer zugeleiteten Stromes umgeschaltet wird. Über ein aus dem Signal mit der halben Horizontalfrequenz abgeleitetes Signal, dessen Frequenz 1/16 der Horizontalfrequenz beträgt, wird der Impulszähler in regelmäßigen Abständen in seinen Anfangszustand zurückgesetzt.

Die bekannte Schaltungsanordnung ist sehr kompliziert aufgebaut und im Betrieb störanfällig. Außerdem vergehen bei einer Störung, d.h. einem Auftreten eines Stromes mit zum Ausgangssignal des Phasenvergleichers falsch zugeordneter Polarität von der Stromquelle, zumindest acht Horizontalperioden, bevor die bekannte Schaltungsanordnung die Polarität des Stromes korrigiert und damit die Farbartabweichungen beseitigt werden können. Ein derartiger Fehler ist in einem mit Hilfe des Farbvideosignals dargestellten Bild für den Betrachter sehr störend.

Die Erfindung hat die Aufgabe, eine Schaltungsanordnung der eingangs genannten Art derart auszubilden, daß das Stellsignal unabhängig von Störungen im Synchronisiersignal stets derart gebildet wird, daß eine einwandfreie, lückenlose Unterdrückung des Einflusses der periodisch wechselnden Phase des Synchronisiersignals gewährleistet ist.

Diese Aufgabe wird erfindungsgemäß dadurch gelöst, daß bei einer Schaltungsanordnung der eingangs genannten Art die Korrekturschaltung eingerichtet ist zum Erzeugen des Korrektursignals mit einer aus dem Vergleich der Phasen der (ersten) Bezugsschwingung und des Synchronisiersignals bestimmten Polarität.

Der Erfindung liegt die Erkenntnis zugrunde, daß der Phasenvergleich zwischen der Bezugsschwingung und dem Synchronisiersignal bereits eine eindeutige und stets richtige Information nicht nur über den Phasenunterschied zwischen den genannten Signalen liefert, sondern auch über die Polarität des Korrektursignals. Diese ist nämlich in jedem Fall entgegengesetzt der Polarität der mit der wechselnden Phase veränderlichen Anteile im Phasensignal, wenn sich diese Anteile, wie beabsichtigt, gegenseitig auslöschen sollen. Nach der Erfindung wird somit statt der bekannten, komplizierten Schaltungsanordnung zur Erzeugung der richtigen Polarität des Korrektursignals, die aus einer Überprüfung des Stellsignals eine Information über die Polarität des Korrektursignals ableitet, eine sehr einfache Anordnung geschaffen, die diese Information unmittelbar aus dem Vergleich der Phasen der (ersten) Bezugsschwingung und des Synchronisiersignals gewinnt. Das Korrektürsignal, das die Information über die richtige Polarität enthält, läßt sich dabei unmittelbar aus dem Phasensignal der (ersten) Phasenvergleichseinrichtung ableiten. Die Korrekturschaltung ist dann besonders einfach aufgebaut.

Nach einer Weiterbildung der Erfindung umfaßt die Korrekturschaltung einen Begrenzerverstärker, der eingerichtet ist zum Erzeugen des Korrektursignals durch Verstärken und Begrenzen auf die vorgegebene Höhe der Amplitude des Korrektursignals. Mit einem derartigen Begrenzerverstärker wird auf einfache Weise aus einem gegebenenfalls noch von der Differenz der Phasen der miteinander verglichenen Bezugsschwingung und des Synchronisiersignals abhängigen Signal ein von dieser Phasendifferenz unabhängiges Korrektursignal gewonnen.

Nach einer weiteren Fortbildung der Erfindung entspricht die Amplitude des Korrektursignals der Amplitude des Phasensignals in Soll-Lage der Phase der Bezugsschwingung zur Phase des Synchronisiersignals. Diese Amplitude des Korrektursignals wird fest eingestellt. Dadurch ist gewährleistet, daß das Korrektursignal nur die von den Phasenwechseln des Synchronisiersignals herrührenden Änderungen auslöscht. Dagegen werden Anteile im Phasensignal, die aus einer Phasenverschiebung zwischen dem Synchronisiersignal und der (ersten) Bezugsschwingung herrühren, durch das Korrektursignal nicht ausgelöscht und treten daher unverfälscht im Stellsignal auf.

Nach einer weiteren Ausgestaltung der Erfindung umfaßt die Korrekturschaltung zum Erzeugen des Korrektürsignals eine zweite Phasenvergleichseinrichtung. Dadurch können das Phasensignal mit der ersten Phasenvergleichseinrichtung und das Korrektürsignal mit der zweiten Phasenvergleichseinrichtung unabhängig voneinander, d.h. ohne.gegenseitige Beeinflussung oder Störung, gebildet werden. Auch kann nach einer vorteilhaften Weiterbildung der Erfindung die zweite Phasenvergleichseinrichtung einen Eingang zum Zuleiten einer zweiten Bezugsschwingung aufweisen, die zur ersten Bezugsschwingung einen festen Phasenunterschied aufweist. Mit diesem Phasenunterschied kann gezielt die Polarität des Korrektursignals beeinflußt werden.

Eine exakte Einstellung der Amplitude des Korrektursignals auf die vorgegebene Höhe kann nach einer anderen Ausgestaltung der Erfindung durch eine Steuerschaltung verbessert werden, die die Höhen der Amplituden des Korrektursignals und des Synchronisiersignals einander anpaßt. Bei üblichen Phasenvergleichseinrichtungen ist nämlich das Phasensignal in der Regel proportional zu den Amplituden der zu vergleichenden Signale, d.h. auch proportional zur Amplitude des Synchronisiersignals. Während die Amplitude der Bezugsschwingung vom Bezugsoszillator auf einem konstanten Wert gehalten wird, kann die Amplitude des Synchronisiersignals Schwankungen oder auch vorgegebenen Veränderungen oder Wechseln unterworfen sein, ersteres insbesondere, wenn dieses Synchronisiersignal beispielsweise aus einem Signalgemisch abgeleitet worden ist, das einen Übertragungsweg mit schwankendem Übertragungsverhalten passiert hat. Um auch in diesem Falle eine einwandfreie Auslöschung der von den Phasenwechselns des Synchronisiersignals herrührenden Änderungen im Stellsignal zu gewährleisten, paßt die Steuerschaltung entweder die Amplitude des Korrektursignals derjenigen des Synchronisiersignals an oder umgekehrt.

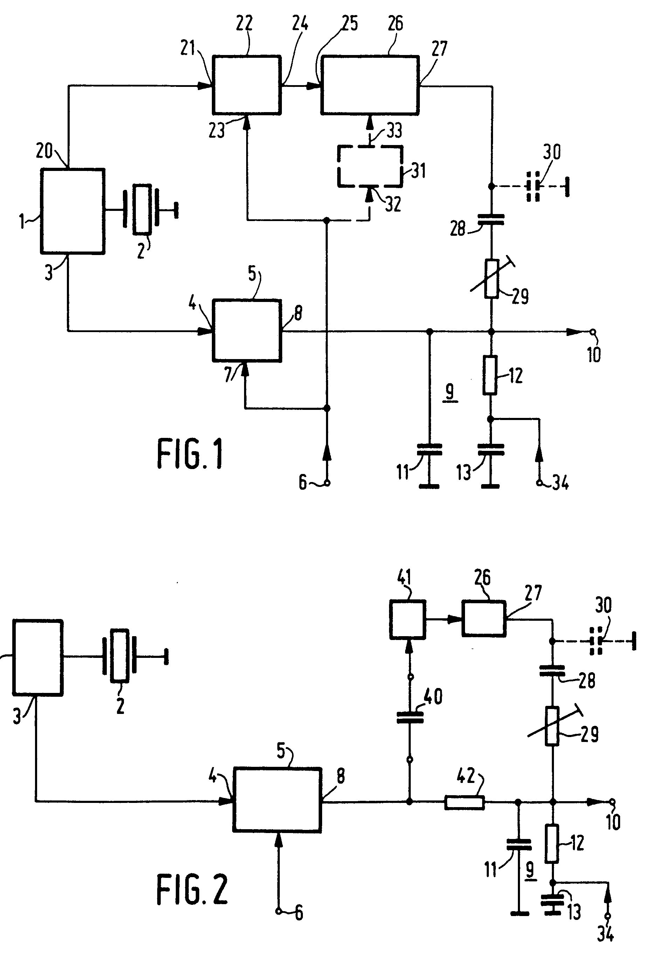

Ein erstes und ein zweites Ausführungsbeispiel für eine erfindungsgemäße Schaltungsanordnung sind in der Figur 1 und 2 der Zeichnung dargestellt und werden im nachfolgenden näher beschrieben.

In der Schaltungsanordnung in Fig. 1 liefert ein Bezugsoszillator 1, der in seiner Schwingfrequenz durch einen Schwingquarz 2 stabilisiert ist, an einem ersten Ausgang 3 eine erste Bezugsschwingung, die einem ersten Eingang 4 einer ersten Phasenvergleichseinrichtung 5 zugeleitet wird. Von einem Synchronisiersignalanschluß 6 wird der ersten Phasenvergleichseinrichtung 5 an einem zweiten Eingang 7 ein Synchronisiersignal zugeleitet. Die erste Phasenvergleichseinrichtung 5 vergleicht die erste Bezugsschwingung und das Synchronisiersignal in der Phase und liefert an einem Ausgang 8 ein dem Phasenunterschied zwischen diesen beiden Signalen entsprechendes Phasensignal.

Das Phasensignal wird vom Ausgang 8 der ersten Phasenvergleichseinrichtung 5 über ein Filter 9 einem Stellsignalanschluß 10 zugeführt, von dem aus es als Stellsignal abgegeben werden kann. Beispielsweise kann dieses Stellsignal in an sich bekannter Weise die Frequenz eines von einem durchstimmbaren Oszillator abgegebenen Signals einstellen, wie dies in der Schaltungsanordnung nach der DE-PS 32 02 210 ausgeführt ist.

Das Filter 9 ist im vorliegenden Beispiel als Tiefpaßfilter ausgebildet, das eine Parallelschaltung aus einem ersten Kondensator 11 und einer Reihenschaltung eines Festwiderstandes 12 mit einem zweiten Kondensator 13 umfaßt, die zwischen den Ausgang 8 der ersten Phasenvergleichseinrichtung 5 und Massepotential geschaltet ist. Ein derartiges Tiefpaßfilter dient zur Glättung hochfrequenter Anteile im Phasensignal, beispielsweise zum Aussieben der Summenfrequenz von Bezugsschwingung und Synchronisiersignal.

Der Bezugsoszillator 1 weist in dem vorliegenden Ausführungsbeispiel weiterhin einen zweiten Ausgang 20 auf, an dem er eine zweite Bezugsschwingung abgibt, die gegenüber der ersten Bezugsschwingung vom ersten Ausgang 3 um einen festen Betrag in der Phase verschoben ist und einem ersten Eingang 21 einer zweiten Phasenvergleichseinrichtung 22 zugeleitet wird. Der zweiten Phasenvergleichseinrichtung 22 wird ferner an einem zweiten Eingang 23 das Synchronisiersignal vom Synchronisiersignalanschluß 6 zugeleitet. Die zweite Phasenvergleichseinrichtung 22 bildet aus einem Phasenvergleich zwischen der zweiten Bezugsschwingung und dem Synchronisiersignal ein Polaritätssignal und gibt dieses an einem Ausgang 24 ab. Dieses Polaritätssignal wird einem Eingang 25 eines Begrenzerverstärkers 26 zugeführt, in diesem verstärkt und in seiner Amplitude begrenzt und an einem Ausgang 27 des Begrenzerverstärkers 26 als Korrektursignal abgegeben. Das Korrektursignal weist somit stets einen durch den Begrenzerverstärker 26 vorgegebenen Betrag sowie eine durch das Polaritätssignal bestimmte Polarität auf. Die zweite Phasenvergleichseinrichtung 22 und der Begrenzerverstärker 26 sind Teile einer Korrekturschaltung.

Vom Ausgang 27 des Begrenzerverstärkers 26 wird das Korrektursignal dem Stellsignalanschluß 10 zugeleitet und dort dem Stellsignal vom Ausgang 8 der ersten Phasenvergleichseinrichtung 5 überlagert. Im vorliegenden Ausführungsbeispiel erfolgt diese Überlagerung linear, d.h. additiv. Zum Sicherstellen der richtigen Polarität des Korrektursignals derart, daß dieses die Anteile im Stellsignal, die von der wechselnden Phase des Synchronisiersignals herrühren, auslöscht, weisen die vom Bezugsoszillator 1 abgegebenen Bezugsschwingungen gegeneinander einen Phasenunterschied von 180° auf. Die Phasenvergleichseinrichtungen 5, 22 sind vorzugsweise identisch ausgebildet, und der Begrenzerverstärker 26 verstärkt das Polaritätssignal ohne Polaritätsumkehr. Das über den Synchronisiersignalanschluß 6 zugeführte Synchronisiersignal weist eine vorgegebene Folge von Phasensprüngen auf, beispielsweise in der Art, daß die Phase des Synchronisiersignals in aufeinander folgenden Zeitintervallen abwechselnd zwischen einem ersten und einem zweiten Wert umschaltet. Das Korrektursignal und die durch das Umschalten der Phase des Synchronisiersignals hervorgerufenen Anteile im Stellsignal haben dann stets entgegengesetzte Polarität. Die Amplitude des Korrektursignals ist im Begrenzerverstärker derart eingestellt, daß sie mit der Amplitude der durch die Phasenwechsel hervorgerufenen Anteile im Stellsignal in Soll-Lage der Phase der ersten Bezugsschwingung zur Phase des Synchronisiersignals übereinstimmt. Auf diese Weise erfolgt bei der Verknüpfung des Korrektursignals und des Stellsignals am Stellsignalanschluß 10 in der genannten Soll-Lage der Phasen eine vollständige Auslöschung der durch die Phasenwechsel im Stellsignal hervorgerufenen Anteile. Außerhalb der Soll-Lage der Phasen der ersten Bezugsschwingung und des Synchronisiersignals verbleibt jedoch eine von Null verschiedene Differenz zwischen dem Korrektursignal und den durch den Phasenwechsel im Stellsignal hervorgerufenen Anteilen.

In dem vorliegenden Ausführungsbeispiel wird das Korrektursignal vom Ausgang 27 das Begrenzerverstärkers 26 über einen Blockkondensator 28 und einen dazu in Reihe geschalteten Einstellwiderstand 29 dem Stellsignalanschluß 10 zugeleitet. Der Blockkondensator 28 verhindert das Fließen eines unerwünschten Gleichstromes zwischen dem Ausgang 27 des Begrenzerverstärkers 26 und dem Ausgang 8 der ersten Phasenvergleichseinrichtung 5. Mit dem Einstellwiderstand 29 kann die Amplitude des Korrektursignals justiert werden.

Gegebenenfalls kann zwischen dem Ausgang 27 des Begrenzerverstärkers 26 und dem Massepotential ein (gestrichelt gezeichneter) Siebkondensator 30 angeordnet sein, durch den insbesondere parasitäre, dem Korrektursignal überlagerte hochfrequente Signalanteile aus der zweiten Phasenvergleichseinrichtung 22 kurzgeschlossen werden.

Die Schaltungsanordnung nach dem Ausführungsbeispiel kann weiterhin eine (ebenfalls gestrichelt gezeichnete) Steuerschaltung 31 enthalten, der an einem Eingang 32 das Synchronisiersignal vom Synchronisiersignalanschluß 6 zugeleitet wird und die über einen Ausgang 33 dem Begrenzerverstärker 26 ein Steuersignal zuleitet. Die Steuerschaltung 31 detektiert die Amplitude des Synchronisiersignals und steuert über das Steuersignal die Amplitude des Korrektursignals derart, daß auch bei sich ändernder Amplitude des Synchronisiersignals dasKorrektursignal und die durch die Phasenwechsel bedingtenAnteile im Stellsignal sich stets in Soll-Lage der Phasen der ersten Bezugsschwingung und des Synchronisiersignals auslöschen. Damit kann der Einfluß ungewollter Schwankungen und vorgegebener Änderungen in der Amplitude des Synchronisiersignals unterdrückt werden, d.h. das Korrektursignal an jede Amplitude des Synchronisiersignals angepaßt werden.

Die beschriebene Schaltungsanordnung ist vorteilhaft in einer Vorrichtung zur Verarbeitung eines PAL-Farbvideosignals verwendbar, wie diese beispielsweise aus der DE-PS 32 02 210 bekannt ist. Dabei tritt als Synchronisiersignal das in seiner Phase von Bildzeile zu Bildzeile wechselnde PAL-Farbsynchronsignal in kurzen Zeitintervallen auf. Die erfindungsgemäße Schaltungsanordnung ist dann vorzugsweise derart ausgestaltet, daß die Phasenvergleichseinrichtungen nur in diesen Zeitintervallen eingeschaltet werden. Der Wert des Stellsignals kann während der übrigen Zeitdauern in einer Abtast- und Halteschaltung gespeichert werden.

Das Filter 9 im vorliegenden Ausführungsbeispiel weist einen weiteren Anschluß 34 auf, über den ein Signal zur Veränderung des Stellsignals am Stellsignalanschluß 10 zugeführt werden kann. Wird beispielsweise mit dem Stellsignal die Frequenz eines durchstimmbaren Oszillators eingestellt, kann auf diese Frequenz über den weiteren Anschluß 34 zusätzlich Einfluß genommen werden. So kann z.B. am Anschluß 34 das Ausgangssignal eines Nebeneinfangdetektors eingespeist werden, wie er aus der DE-PS 32 02 210 bekannt ist.

In der vorstehend beschriebenen Ausführungsform wird das Polaritätssignal in einer gesonderten, zweiten Phasenvergleichseinrichtung 22 gewonnen. Es ist aber beispielsweise auch möglich, das Polaritätssignal aus dem Phasensignal vom Ausgang 8 der ersten Phasenvergleichseinrichtung 5 zu gewinnen, wobei dann allerdings die Polarität zur Erzeugung des Korrektursignals umgekehrt werden muß.

Ein Ausführungsbeispiel für eine derartige Schaltungsanordnung ist in der Fig. 2 dargestellt. Darin sind Elemente, die bereits in der Schaltungsanordnung nach Fig. 1 vorhanden und dazu beschrieben worden sind, mit identischen Bezugszeichen versehen.

Die Schaltungsanordnung nach Fig. 2 unterscheidet sich von der Schaltungsanordnung nach Fig. 1 darin, daß der Bezugsoszillator 1 nur einen ersten Ausgang 3 aufweist, an dem die erste Bezugsschwingung abgegeben wird. Diese wird wie in der Schaltungsanordnung nach Fig. 1 der ersten Phasenvergleichseinrichtung 5 zugeführt und darin mit dem Synchronisiersignal vom Synchronisiersignalanschluß 6 verglichen. Vom Ausgang 8 der ersten Phasenvergleichseinrichtung 5 wird das Phasensignal einerseits über einen Längswiderstand 42 dem Filter 9 und andererseits über einen Längskondensator 40 und eine Polaritätsumkehrstufe 41 unmittelbar dem Eingang 25 des Begrenzerverstärkers 26 zugeleitet. Die weitere Verarbeitung der in dieser Schaltungsanordnung auftretenden Signale erfolgt in der bereits zu Fig. 1 geschilderten Weise.

In einem beispielhaften Aufbau der in Fig. 1 dargestellten Schaltungsanordnung für die Verwendung in einer Vorrichtung zur Verarbeitung eines PAL-Farbvideosignals weisen die Bezugsschwingungen die PAL-Farbträgerfrequenz von nahezu 4,43 MHz auf und sind in der Phase gegeneinander um 180° verschoben. Das Synchronisiersignal weist bildzeilenfrequente Schwingungsimpulse mit wechselnder, sich von Schwingungsimpuls zu Schwingungsimpuls um 90° ändernder Phase auf. Die Größe des ersten Kondensators 11 und des Blockkondensators 28 ist auf 10 nF, die Größe des zweiten Kondensators 13 auf 4,7 μF, der Wert des Festwiderstands 12 auf 470 Ohm und der des Einstellwiderstands 29 auf 2,2 kOhm festgelegt.

## Patentansprüche

1. Schaltungsanordnung zum Ableiten eines Stellsignals aus einem Synchronisiersignal mit in vorgegebener Folge wechselnder Phase, wobei das Stellsignal von den vorgegebenen Wechseln der Phase unabhängig ist, mit einem Bezugsoszillator (1) zum Liefern einer Bezugsschwingung bestimmter Frequenz und Phase, einer Phasenvergleichseinrichtung (5) zum Bilden eines der Phasendifferenz zwischen dem Synchronisiersignal und der Bezugsschwingung entsprechenden Phasensignals, einer Korrekturschaltung (22, 26) zum Erzeugen eines Korrektursignals, das eine Amplitude vorgegebener Höhe sowie eine wechselnde Polarität aufweist, sowie einer Verknüpfungseinrichtung (10) zum Überlagern des Phasensignals und des Korrektursignals zu dem Stellsignal derart, daß darin von den Phasenwechseln des Synchronisiersignals herrührende Änderungen ausgelöscht sind, dadurch gekennzeichnet, daß die Korrekturschaltung (22, 26) eingerichtet ist zum Erzeugen des Korrektursignals mit einer aus dem Vergleich der Phasen der Bezugsschwingung und des Synchronisiersignals bestimmten Polarität.

**2.** Schaltungsanordnung nach Anspruch 1, dadurch gekennzeichnet, daß die Korrekturschaltung (22, 26) einen Begrenzerverstärker (26) umfaßt, der eingerichtet ist zum Erzeugen des Korrektursignals durch Verstärken und Begrenzen auf die vorgegebene Höhe der Amplitude des Korrektursignals.

**3.** Schaltungsanordnung nach Anspruch 1 oder 2, dadurch gekennzeichnet, daß die Amplitude des Korrektursignals der Amplitude des Phasensignals in Soll-Lage der Phase der Bezugsschwingung zur Phase des Synchronisiersignals entspricht.

**4.** Schaltungsanordnung nach einem oder mehreren der vorhergehenden Ansprüche, dadurch gekennzeichnet, daß die Korrekturschaltung (22, 26) zum Erzeugen des Korrektursignals eine zweite Phasenvergleichseinrichtung (22) umfaßt.

**5.** Schaltungsanordnung nach Anspruch 4, dadurch gekennzeichnet, daß die zweite Phasenvergleichseinrichtung (22) einen Eingang zum Zuleiten einer zweiten Bezugsschwingung aufweist, die zur ersten Bezugsschwingung einen festen Phasenunterschied aufweist.

**6.** Schaltungsanordnung nach einem oder mehreren der vorhergehenden Ansprüche, gekennzeichnet durch eine Steuerschaltung (31) zum Anpassen der Höhen der Amplituden des Korrektursignals und des Synchronisiersignals aneinander.

## Claims

**1.** Circuit arrangement for deriving a control signal from a synchronizing signal whose phase alternates in a predetermined order, which control signal is independent of the predetermined phase alternation, the arrangement comprising a reference oscillator (1) for supplying a reference signal of a specific frequency and phase, a phase-comparator means (5) for generating a phase signal which corresponds to the phase difference between the synchronizing signal and the reference signal, a correction circuit (22, 26) for generating a correction signal of predetermined amplitude and alternating polarity, and a combining device (10) for superimposing the phase signal and the correction signal on the control signal so as to cancel control-signal variations caused by the phase alternation of the synchronizing signal, characterized in that the correction circuit (22, 26) is arranged for generating the correction signal that has a polarity determined by the phase comparison between the reference signal and the synchronizing signal.

**2.** Circuit arrangement as claimed in Claim 1, characterized in that the correction circuit (22, 26) comprises a limiting amplifier (26) arranged for generating the correction signal by amplifying and limiting the correction signal to the predetermined value of the amplitude.

**3.** Circuit arrangement as claimed in Claim 1 or 2, characterized in that the amplitude of the correction signal corresponds to the amplitude of the phase signal when the reference signal and the synchronizing signal have the desired phase relationship.

**4.** Circuit arrangement as claimed in any of the preceding Claims, characterized in that the correction circuit (22, 26) comprises a second phase comparator (22) for generating the correction signal.

**5.** Circuit arrangement as claimed in Claim 4, characterized in that the second phase comparator (22) has an input for presenting a second reference signal that has a fixed phase difference relative to the first reference signal.

**6.** Circuit as claimed in any of the preceding Claims, characterized by a control circuit (31) for adapting the amplitudes of the correction and synchronizing signals to each other.

## Revendications

**1.** Montage de circuit destiné à dériver un signal de réglage d'un signal de synchronisation dont la phase change selon une séquence prédéfinie, le signal de réglage état indépendant des changements prédéfinis de la phase, comportant :

un oscillateur de référence (1) pour fournir une oscillation de référence de fréquence et de phase déterminées,

un dispositif comparateur de phases (5) pour former un signal de phase correspondant à la différence de phases entre le signal de synchronisation et l'oscillation de référence,

un circuit correcteur (22, 26) pour produire un signal de correction qui présente une amplitude de hauteur prédéfinie et une polarité changeante,

ainsi qu'un dispositif de combinaison (10) pour superposer le signal de phase et le signal de correction au signal de réglage de façon telle que les variations produites par les changements de phase du signal de synchronisation y soient effacées, caractérisé en ce que le circuit de correction (22, 26) est conçu pour produire le signal de correction avec une polarité déterminée à partir de la comparaison des phases de l'oscillation de référence et du signal de synchronisation.

2.    Montage de circuit suivant la revendication 1, caractérisé en ce que le circuit correcteur (22, 26) comprend un amplificateur limiteur (26) qui est conçu pour produire le signal de correction par amplification et limitation à la hauteur prédéfinie de l'amplitude du signal de correction.

3.    Montage de circuit suivant la revendication 1 ou 2, caractérisé en ce que l'amplitude du signal de correction correspond à l'amplitude du signal de phase dans la position de consigne de la phase de l'oscillation de référence par rapport à la phase du signal de synchronisation.

4.    Montage de circuit suivant l'une quelconque des revendications précédentes, caractérisé en ce que le circuit correcteur (22, 26) comprend un second dispositif comparateur de phases (22) pour la production du signal de correction.

5.    Montage de circuit suivant la revendication 4, caractérisé en ce que le second dispositif comparateur de phases (22) comporte une entrée pour l'amenée d'une seconde oscillation de référence qui présente une différence de phase fixe par rapport à la première oscillation de référence.

6.    Montage de circuit suivant l'une quelconque des revendications précédentes, caractérisé par un circuit de commande (31) destiné à adapter les hauteurs des amplitudes du signal de correction et du signal de synchronisation l'une à l'autre.

FIG.1

FIG.2